# EUROPEAN PATENT APPLICATION

(11) **EP 4 098 998 A1**
(43) Date of publication of application: **07.12.2022**
(21) Application number: 20897926.0
(22) Date of filing: 10.12.2020
(51) Int. Cl.: G01N 5/04, C10J 3/20, C10J 3/72

(54) **GASIFICATION EXPERIMENT SYSTEM AND METHOD SUITABLE FOR SOLID WASTE**

(30) Priority: 08.01.2020 CN 202010020871
(71) Applicant: China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: ZHONG, Xiang bin, Shenzhen, Guangdong 518124 (CN); ZHANG, Xue ling, Shenzhen, Guangdong 518124 (CN); WEI, Shu hong, Shenzhen, Guangdong 518124 (CN); ZHANG, Zhen nan, Shenzhen, Guangdong 518124 (CN); LI, Sen quan, Shenzhen, Guangdong 518124 (CN); LI, Qiang, Shenzhen, Guangdong 518124 (CN); LIU, Fan, Shenzhen, Guangdong 518124 (CN); LIANG, Wei lun, Shenzhen, Guangdong 518124 (CN)
(74) Representative: Greaves Brewster LLP
(86) International application number: PCT/CN2020/135069
(87) International publication number: WO 2021/115355

(57) **Abstract**

The present application provides a gasification experiment system and method suitable for solid waste. The gasification experiment system includes a gas supply subsystem (10) used for providing external gas, a reaction subsystem (50) connected to the reaction subsystem (50), and a lifting/lowing seal system (30) and a measurement control system (20), the measurement control system (20) is respectively communication connected with the reaction subsystem (50) and the lifting/lowing seal system (30). A solid waste reaction sample is placed in the lifting/lowing seal system (30). The measurement control system (20) is configured for controlling the temperature of the chamber in the reaction subsystem (50) to heat the preset temperature, controlling the lifting/lowing seal system (30) to transport the solid waste reaction sample into a sealing chamber of the reaction subsystem (50), and under the action of gas, gasifying the solid waste. The present application realizes the technical effect of simultaneously stablizing weight measurement and separating and collecting gas and liquid products.

## Description

### FIELD OF THE INVENTION

The present application generally relates to nuclear power plant equipment, and more particularly, to a gasification experiment system and method suitable for solid waste.

### BACKGROUND OF THE INVENTION

Solid waste is a by-product of human production and life. With the development of society, the output of solid waste is increasing rapidly. If the solid wastes fail to be treated properly, they will cause great harm to the environment.

Low radioactive solid waste is a kind of solid waste produced in the process of nuclear power plant in operation and overhaul, which contains a certain amount of radioactive nuclide. If low radioactive solid waste subjects to direct landfill treatment, the radioactive nuclide will migrate to the soil, and great affect the environment. Therefore, it is needed to be the appropriate capacity reduction process and seal the landfill, to reduce the impact on the environment.

Gasification is a thermochemical method for the effective disposal of solid wastes. This method can decompose solid wastes into gas, liquid and solid products, among which gas and liquid products have certain utilization value and can be reused. To dispose the solid wastes better, it is necessary to study the gasification characteristics and product characteristics of the solid wastes.

One of the prior art is provided with a thermogravimetric reactor for testing large samples.The thermogravimetric reactor adopts suspension type weighing manner. During the experiment, the heating furnace body is raised to the reaction zone by hydraulic lifting device to heat the sample. However, the heating furnace needs to heat several parts including quartz tube, reactive gas, crucible, derrick and sample after rising, it will take a long time, which greatly affects the experimental requirement of heating the sample to the reaction temperature in a short time in the fixed-temperature experiment, and then leads to the poor experimental results of the fixed-temperature experiment. In addition, the pyrolysis and gasification products contain gas and liquid products, which are not separated. Therefore, the tar composition contained in the reactive gas is easy to block the outlet channel.

Another one of the prior art is provided with an experiment system and method for measuring temperature and weight during columnar coal pyrolysis. The device weighs the experimental samples through a horizontal structure weighing system, which greatly reduces the weight of the support rod and improves the accuracy of the weighing. However, in actual industry, solid wastes are mostly pyrolyzed and vaporized at constant temperature, and the device cannot achieve the requirements of constant temperature experiment because it does not have a lifting/lowering device.

Still another one of the prior art is provided with a thermogravimetric analysis (TGA) bench. The equipment has made some improvements to the tube furnace, and the balance is placed above the tube furnace, and the mass change of the sample is weighed by the silk wire and the crucible, and the TGA experiment of large mass samples is realized. However, the structure can not move the sample up and down during the experiment, so the bench can not carry out the fixed-temperature experiment of the sample. In addition, due to the existence of the suspension wire, the experimental equipment can not be sealed, which leads to the reaction products cannot be collected.

In view of the foregoing, what is needed, therefore, is to privide a gasification experiment system and method suitable for solid waste, to achieve simultaneously stablizing weight measurement and separating and collecting gas and liquid products.

### SUMMARY OF THE INVENTION

One object of the present application is to provide a gasification experiment system and method suitable for solid waste, to achieve simultaneously stablizing weight measurement and separating and collecting gas and liquid products.

According to one embodiment of the present appication, a gasification experiment system suitable for solid waste includes: a gas supply subsystem configured for providing external gas, a reaction subsystem connected with the gas supply subsystem, and a lifting/lowering seal system and a measurement control system, the measurement control system is respectively communication connected with the reaction subsystem and the lifting/lowering seal system;
a solid waste reaction sample is placed in the lifting/lowing seal system; the measurement control system is configured for controlling the temperature of the chamber in the reaction subsystem to heat the preset temperature, controlling the lifting/lowing seal system to transport the solid waste reaction sample into a sealed chamber of the reaction subsystem, and under the action of gas, gasifying the solid waste.

According to one aspect of the present application, the measurement control system is also configured for measuring real-time state parameters of the solid waste reaction sample and controlling the lifting/lowering seal system to discharge the waste material after gasification treatment out of the sealing chamber of the reaction subsystem according to the change of state parameter.

According to one aspect of the present application, the gas supply subsystem is configured for supplying gas to the reaction subsystem and the lifting/lowering seal system after the sealing chamber temperature in the reaction subsystem is heated to the preset temperature, the gas supply subsystem includes:
a reactive gas storage tank, configured for providing reactive gas to the reaction subsystem; the reactive gas storage tank is stored with reactive gas and has one end connected with the reaction subsystem;
a protective gas storage tank, configured for providing protective gas to the lifting/lowering seal system; the protective gas storage tank is stored with protective gas and has one end connected with the lifting/lowering seal system.

According to one aspect of the present application, the gasification experiment system suitable for solid waste further includes:
a product collection subsystem connected with the reaction subsystem, configured for separating and collecting gaseous and liquid products of solid waste reaction samples;

According to one aspect of the present application, the measurement control system includes:
a crucible, configured for placing solid waste reaction samples;
a derrick, connected with the crucible, and configured for suspending the crucible;
a balance, configured for measuring the weight of solid waste reaction sample, and the derrick is connected with a hook of the lower part of the balance;
a computer, communicated with the balance and lifting/lowering seal system, and configured for receiving the state parameters of the solid waste reaction sample measured in real-time by the balance; and controlling the lifting/lowering seal system to move the waste material after gasification treatment out of the sealing chamber of the reaction subsystem according to the state parameter;
the computer is also communicated with the reaction subsystem, and configured for controlling the temperature of the chamber in the reaction subsystem to heat the preset temperature, controlling the lifting/lowing seal system to transport the solid waste reaction sample into a sealed chamber of the reaction subsystem, and under the action of gas, gasifying the solid waste.

According to one aspect of the present application, the lifting/lowering seal system includes:
a lifting/lowering subsystem, communicated with the computer, and configured for lifting or lowering the crucible under the control of the computer;
a sealing subsystem, connected with the lifting/lowering subsystem, and configured for forming a sealing space to prevent the impurity gas from influencing the experimental results.

According to one aspect of the present application, the reaction subsystem includes:
a quartz tube, configured for forming a sealing chamber for reaction of the solid waste reaction sample; the upper end of the quartz tube is provided with an air outlet, and the lower end is provided with an air inlet; the air inlet is connected with the reactive gas storage tank, configured for inputing the reactive gas into the quartz tube; the air outlet is connected with the product collection subsystem, and configured for transporting gaseous products to the product collection subsystem;
a heating furnace, surrounding the quartz tube and communicated with the computer, configured for heating the quartz tube under the control of the computer; wherein the heating furnace includes a first constant house and a second constant house;
a first thermocouple, arranged in the middle of the first constant house and communicated with the computer; and configured for detecting the temperature of the first constant house and generating a temperature signal, which is transmitted to the computer;
a second thermocouple, arranged in the middle of the second constant house and communicated with the computer; and configured for detecting the temperature of the second constant house and generating a temperature signal, which is transmitted to the computer.

According to one aspect of the present application, the lifting/lowering subsystem includes:
a stepping motor, configured for providing the rotation driving force controllably; the ball screw is fixedly connected with the rotating shaft of the stepping motor through the coupling, for turn the rotation driving force generated by the stepping motor into lifting/lowering force;
the slider is slidably connected with the ball screw;
the water-cooled tray is fixedly connected with the slider;
rotation of the rotating shaft of the stepping motor drives the ball screw to rotate through the coupling, so that the slider moves up and down along the ball screw to realize the lifting/lowering of the water-cooled tray;
a first support frame, fixedly connected with the stepping motor, and configured for supporting the stepping motor;
the water-cooled tray is configured for placing the balance;
wherein the communication module of the stepping motor is connected with the computer to realize the forward or reverse of the rotating shaft of the stepping motor under the control of the computer, to realize the transport of the solid waste reaction sample to the sealing chamber of the reaction subsystem or to remove the waste material after gasification treatment out of the sealing chamber of the reaction subsystem.

According to one aspect of the present application, the product collection subsystem includes:
a condensing tube, connected with the air outlet, and configured for condensing the gas and liquid products produced by the solid waste reaction sample;
a conical bottle, connected with the condensing tube, and configured for collecting gas and liquid products after condensation;
a water bath box, wherein the conical bottle is placed in the water bath box, the water bath box is configured for storing the constant temperature water, to ensure the separation of gas and liquid products;
a vacuum pump, connected with the water bath box and the outer wall of the condensing tube respectively at two ends thereof, and configured for transporting the water in the water bath box to the outer wall of the condensing tube and flow down the condensing tube;
a drying tube, connected with the conical bottle and the air collector at two ends thereof, and configured for drying the gas products and transport them to the air collector for collection.

According to one aspect of the present application, the air collector is aluminum foil air collector or polytetrafluoron air collector, which is convenient for stable preservation of gas products.

According to one aspect of the present application, the sealing subsystem includes:
a balance cover, fixedly connected with the water-cooled tray, and configured for sealing the balance;
a bellows, having one end being fixedly connected with the water-cooled tray, and the other end being fixedly connected with the quartz tube through a ball valve.

According to one aspect of the present application, the length of the derrick is longer than the length of the bellows, and when the water-cooled tray is located at a predetermined high point, it is convenient for the rapid removal and placement of solid waste reaction samples.

According to one aspect of the present application, the lifting/lowering subsystem futher includes: a balance weight, wherein the balance weight is fixedly connected with the balance cover through a silk wire, and the silk wire is fixed to a roller fixed on the top of the first support frame.

According to one aspect of the present application, a silicagel gasket is arranged between the balance cover and the balance for further sealing.

According to one aspect of the present application, the gasification experiment system suitable for solid waste futher includes: a temperature control system, respectively connected with the heating furnace and the computer, and configured for setting a multi-segment heating program to control the heating of the heating furnace under the control of the computer, and the temperature control system can be an intelligent touch screen control system.

According to another embodiment of the present application, a gasification experiment method suitable for solid waste includes the steps of:
S1, connecting gas supply subsystem, measurement control system, lifting/lowering subsystem, sealing subsystem, reaction subsystem and product collection subsystem successively;
S2, opening a heating furnace and setting a required reaction temperature, at the same time, lifting the balance to the top, and opening the fast contact clamp at the lower end of the bellows, and placing the quantitative solid waste reaction sample in the crucible;
S3, when the temperature of the heating furnace rises to the specified temperature and holds for 10 min, opening the gas supply subsystem and purging for 5 min to exhaust the air in the quartz tube;
S4, lowering the solid waste reaction sample into the quartz tube for reaction through the lifting/lowering subsystem, and the weight of the solid waste reaction sample is collected in real-time through the computer;
S5, continuously pouring cold water into the condensing tube to cool the reaction products, and collectting the gaseous products with the air collector;
S6, when the display of the balance reaches a stable value, the reaction is completed; controlling the lifting/lowering subsystem to raise the solid waste reaction sample to the highest point, shuting down the gas supply subsystem and the heating furnace; when the crucible is cooled, it is removed, and the solid remaining in the crucible is the solid residue of the reaction; using methylene chloride to clean the channels of the product collection subsystem, and the cleaned liquid was kept warm in a water bath box at 40°C; after the methylene chloride was evaporated, the remaining viscous liquid was the liquid product of the reaction.

Compared with the prior art, the present application has the following advantages:
the present application provides a gasification experiment system and method suitable for solid waste, aiming at the technical problem that stable weight measurement and separation and collection of gas and liquid products cannot be realized at the same time in the existing technology. Due to the seal of the balance cover, bellows, ball valve and other parts, the experiment process will not mix air and other impurities, to ensure the accuracy of the experiment. The product collection subsystem uses cold water to cool the gas and liquid products, which can ensure the separation effect of different products and makes the subsequent product detection more accurate. At the same time, the addition of drying tube avoids the influence of water vapor on the gas composition of the product. The present application has the advantages of a common thermogrory analyzer and a conventional tubular fixed-bed reactor. Under the condition of constant temperature, the mass change information of solid waste and the gas composition of the product of the solid waste samples in the gasification process and can be obtained at the same time. In addition, the operating system of the present application adopts an intelligent touch screen control system, which can simultaneously control multi-segment heating program, and has the function of overtemperature self-tuning, which is simple to operate and easy to learn.

### BRIEF DESCRIPTION OF THE DRAWINGS

Fig. 1 shows a structural diagram of a gasification experiment system suitable for solid waste according to Embodiment 1 of the present application;
Fig. 2 shows a measurement control system of the gasification experiment system suitable for solid waste according to Embodiment 1 of the present application;
Fig. 3 shows a reaction subsystem of the gasification experiment system suitable for solid waste according to Embodiment 1 of the present application;
Fig. 4 shows a lifting/lowering subsystem of the gasification experiment system suitable for solid waste according to Embodiment 1 of the present application;
Fig. 5 shows a product collection subsystem of the gasification experiment system suitable for solid waste according to Embodiment 1 of the present application;
Fig. 6 shows a sealing subsystem of the gasification experiment system suitable for solid waste according to Embodiment 1 of the present application;
Fig. 7 is a flowchart of a gasification experiment method suitable for solid waste according to Embodiment 2 of the present application.

### DETAILED DESCRIPTION OF THE INVENTION

In order to solve the technical problems existing in the prior art that it is impossible to achieve stable weight measurement and separation and collection of gas and liquid products simultaneously, the present application aims to provide a gasification experiment system and method suitable for solid waste. The core idea of the present application is as follows: realize seal through the balance cover, bellows, ball valve and other parts, the experiment process will not mix air and other impurities, to ensure the accuracy of the experiment; the product collection subsystem uses cold water to cool the gas and liquid products, which ensures the separation effect of different products and makes the subsequent product detection more accurate. At the same time, the addition of drying tube avoids the influence of water vapor on the gas composition of the product. The present application has the advantages of a traditional thermogravimetric analyzer and the conventional tubular fixed-bed reactor. Under the condition of constant temperature, the mass change information of solid waste and the gas composition of the product of samples in the gasification process can be obtained at the same time. In addition, the operating system of the present application adopts an intelligent touch screen control system, which can simultaneously control multi-segment heating program, and has the function of overtemperature self-tuning, which is simple to operate and easy to learn.

In order to make the object, technical solution and advantages of the present application more clear, the implementation of the present application will be further described in detail as following in combination with the drawings.

### Embodiment 1

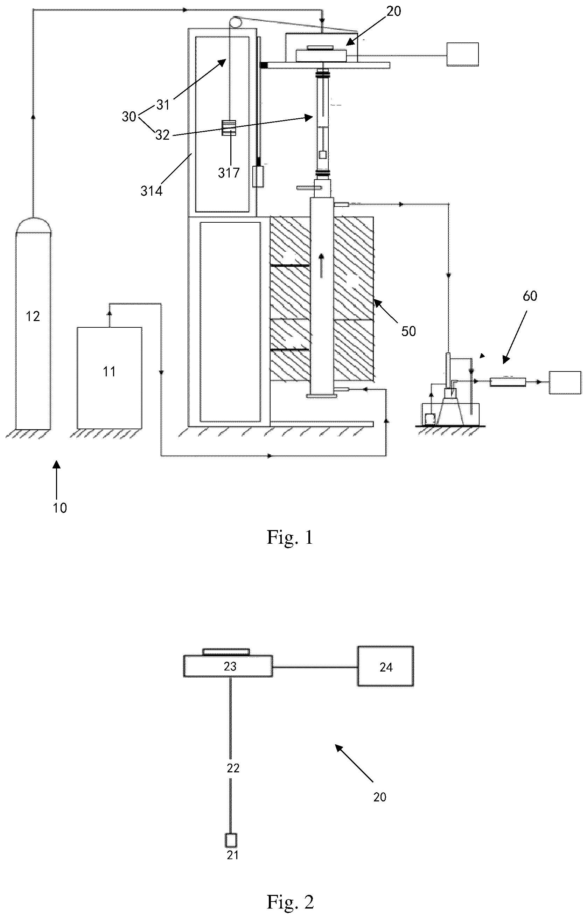

Embodiment 1 of the present application provides a gasification experiment system suitable for solid waste, as shown in Fig. 1. The gasification experiment system suitable for solid waste includes a gas supply subsystem 10, which is connected with a lifting/lowering seal system 30 and a reaction subsystem 50, and is configured for providing protective gas and reactive gas for the lifting/lowering seal system 30 and reaction subsystem 50 respectively; a measurement control system 20 connected with the reaction subsystem 50 and the lifting/lowering seal system 30 respectively, the solid waste reaction sample is placed in the lifting/lowering seal system 30, and the measurement control system 20 is communication connected with the reaction subsystem 50 and the lifting/lowering seal system 30 respectively; the measurement control system 20 is configured for controlling the temperature of the chamber in the reaction subsystem 50 to heat the preset temperature, controlling the lifting/lowing seal system 30 to transport the solid waste reaction sample into a sealed chamber of the reaction subsystem 50, and under the action of gas, gasifying the solid waste; the measurement control system 20 is also configured to measuring real-time state parameters of the solid waste reaction sample; and controlling the lifting/lowering seal system 30 to move to discharge the waste material after gasification treatment out of the sealing chamber of the reaction subsystem 50 according to the change of state parameters; a product collection subsystem 60 connected with the reaction subsystem 50, configured for separating and collecting gaseous and liquid products of solid waste reaction samples.

The gasification experiment system suitable for solid waste of the present application heats up the solid waste reaction sample through the reaction subsystem 50, and uses the lifting/lowering seal system 30 to approximately realize the weightlessness information collection during the gasification reaction process at constant temperature. The gasification experiment system suitable for solid waste of the present application has the advantages of both the ordinary thermogravimetric analyzer and the conventional tubular fixed-bed reactor. Under the condition of constant temperature, the mass change information of solid waste reaction sample in the gasification process and the gas composition of the product can be obtained at the same time, which is convenient for experiment and analysis. The reaction subsystem 50 is configured for controlling the lifting/lowering seal system 30 to transport the solid waste reaction sample to the sealing chamber of the reaction subsystem 50 after the sealing chamber temperature in the reaction subsystem 50 is heated to the preset temperature, and the solid waste reaction sample is gasification processed.

The lifting/lowering seal system 30 includes a lifting/lowering subsystem 31 and a sealing subsystem 32. The lifting/lowering subsystem 31 is fixed with the measurement control system 20, and configured for lifting or lowering the measurement control system 20 under the control of the measurement control system 20. The sealing subsystem 32 is fixed with the lifting/lowering subsystem 31, and configured for forming a sealing space to prevent the influence of impurity gas on the experimental results. The lifting/lowering subsystem 31 and the balance weight 317 are fixed with the sealing subsystem 32 by the silk wire, and the silk wire is supported by the roller fixed on the top of the first support frame 314. A hook is added to the sealing subsystem 32 and a balance weight 317 is used to reduce the jitter of the lifting/lowering subsystem 31 during the descent and ensure the reliability of the experimental data.

It can be seen from Fig. 1 that the gas supply subsystem 10 includes a reactive gas storage tank 11 and a protective gas storage tank 12. The reactive gas storage tank 11 is configured for providing reactive gas to the reaction subsystem 50; the reactive gas storage tank 11 is internally stored with reactive gas, one end of he reactive gas storage tank 11 is connected with the reaction subsystem 50. The reactive gas can be switched to N2, CO2, air, water vapor and other different gases according to the needs of the experiment. The protective gas storage tank 12 is configured for providing protective gas to the lifting/lowering seal system 30; the protective gas storage tank 12 is internally stored with protective gas, one end of the protective gas storage tank 12 is connected with the lifting/lowering seal system 30. The protective gas is inert gas with small flow rate. The protective gas uses inert gas to discharge the air in the sealing subsystem 32 to prevent the air from mixing into the gasification gas and affecting the detection of gas components.

It should be noted that the reactive gas tank 11 is connected with the reaction subsystem 50 via a high temperature resistant silicagel tube having a diameter of 12mm. The sealing subsystem 32 is also connected to the protective gas tank 12 through a high temperature resistant silicagel tube having a diameter of 12mm, for the input of inert protective gas.

As shown in Fig. 2, the measurement control subsystem 20 includes: a crucible 21, a derrick 22, a balance 23 and a computer 24.

The crucible 21 is configured for placing solid waste reaction samples; the crucible 21 is made of quartz material with high transparency and high temperature resistance characteristic. The crucible 21 is in the shape of a round barrel, and 5-10 air holes are evenly distributed on the side wall to ensure that the reaction gas can fully contact with the experimental sample for reaction.

The derrick 22 is connected with the crucible 21, and configured for suspending crucible 21. The derrick 22 is made from 310S stainless steel wire, which has the characteristics of high temperature resistance, fast heating and no deformation at high temperature. Specifically, the crucible 21 is provided with 4 holes with a diameter of 3mm, the crucible 21 can be connected with the derrick 22 through the hole.

The balance 23 is configured for measuring the weight of solid waste reaction sample, and the derrick 22 is connected with the hook at the lower part of the balance 23. The balance 23 uses Ohaus PR series precision balance, the precision is 1/1000, the maximum bearing weight is 220g.

The computer 24 is communicated with the balance 23 and lifting/lowering seal system 30, and configured for receiving the state parameters of the solid waste reaction sample measured in real-time by the balance 23; and controlling the lifting/lowering seal system 30 to move the waste material after gasification treatment out of the sealing chamber of the reaction subsystem 50 according to the change of state parameter. The computer 24 is also communicated with the reaction subsystem 50, for controlling the temperature of the chamber in the reaction subsystem 50 to heat the preset temperature, controlling the lifting/lowing seal system 30 to transport the solid waste reaction sample into a sealed chamber of the reaction subsystem 50, and under the action of gas, gasifying the solid waste.

Preferably, the measured data of the balance 23 is transmitted to the computer 24 in real-time through RS232 to USB data cable.The computer 24 can collect the state parameter of the sample in real-time through special software, and the state parameter can be weight.

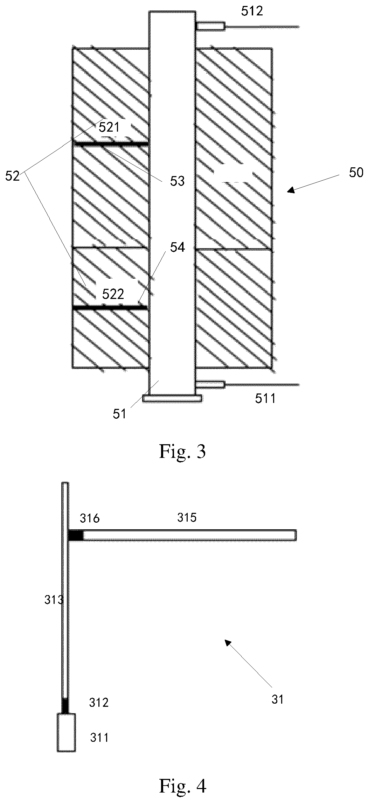

As shown in Fig. 3, reaction subsystem 50 includes: a quartz tube 51, a heating furnace 52, a first thermocouple 53 and a second thermocouple 54.

The quartz tube 51 is configured for forming a sealing chamber for reaction of the solid waste reaction sample. The upper end of the quartz tube 51 is provided with an air outlet 512, and the lower end of the quartz tube 51 is provided with an air inlet 511. The air inlet 511 is connected with the reactive gas storage tank 11, and configured for inputing the reactive gas into the quartz tube 51. The air outlet 512 is connected with the product collection subsystem 60, and configured for transporting gaseous and liquid products to the product collection subsystem 60. The quartz tube 51 has an internal diameter of 80mm and a total length of 1080mm and can operate up to 1200°C.

The heating furnace 52 is surrounding the quartz tube 51, and communicated with the computer 24; and configured for heating the quartz tube 51 under the control of the computer 24. The heating furnace 52 includes a first constant house 521 and a second constant house 522. The maximum operating temperature of the heating furnace 52 is 1100°C, the imported heating wire is used, and the heating rate is 5-20°C/min. The heating furnace 52 is connected with computer 24 through the temperature control system. The temperature control system is configured for setting a multi-segment heating program to control the heating of the heating furnace 52 under the control of the computer 24, and the temperature control system can be an intelligent touch screen control system. The intelligent touch screen control system adopts 7-inch intelligent touch screen control, which can set 30 segments of heating program, and has the function of instrument self-tuning and high temperature compensation.

The first thermocouple 53 is arranged in the middle of the first constant house 521 and communicated with the computer 24; and configured for detecting the temperature of the first constant house 521 and generating a temperature signal, which is transmitted to the computer 24.

The second thermocouple 54 is arranged in the middle of the second constant house 522 and communicated with the computer 24; and configured for detecting the temperature of the second constant house 522 and generating a temperature signal, which is transmitted to the computer 24. The computer 24 receives the temperature signal generated by the first thermocouple 53 and the second thermocouple 54, and controls the temperature control system to control the heating furnace 52 to continue heating or control the lifting/lowering subsystem 31 to transport the solid waste to the sealing chamber of the reaction subsystem 50, and gasify the solid waste under the action of gas.

Preferably, the first thermocouple 53 and the second thermocouple 54 are both K-type sheathed thermocouple having fast response speed and high temperature measurement accuracy.

As shown in Fig. 4, the lifting/lowering subsystem 31 includes: a stepping motor 311 and a first support frame 314.

The stepping motor 311 is configured for controllably providing the lifting/lowering driving force, and the speed of the stepping motor 311 is adjustable, up to 1400r/min. The ball screw 313 is fixedly connected with the rotating shaft of the stepping motor 311 through the coupling 312; the slider 316 is slidably connected with the ball screw 313; and the water-cooled tray 315 is fixedly connected with the slider 316. The rotation of the rotating shaft of the stepping motor 311 drives the ball screw 313 to rotate through the coupling 312, so that the slider 316 moves along the ball screw 313 up and down to lift or lower the water-cooled tray 315. The first support frame 314 is fixedly connected with the stepping motor 311, and configured for supporting the stepping motor 311; and the water-cooled tray 315 is configured for placing the balance 23; the communication module of the stepping motor 311 is connected with the computer 24 to realize the forward or reverse of the rotating shaft of the stepping motor 311 under the control of the computer 24, so as to realize the transport of the solid waste reaction sample to the sealing chamber of the reaction subsystem 50 or to remove the waste material after gasification treatment to the sealing chamber of the reaction subsystem 50.

Preferably, the lead of the ball screw 313 is 5mm, the diameter of the ball screw 313 is 25mm, and the ball screw 313 and the stepping motor 311 have a same center line, which is used to reduce the wear caused during work. The water-cooled tray 315 is made of stainless steel with a cavity inside, which can be filled with cold water to reduce the temperature around the balance 23 to protect the balance 23.

It should be noted that the fastest speed of stepper motor 31 is 1400r/min, the whole lifting/lowering process only takes 4-6s, and the preheating process of the solid waste reaction sample also requires 4-5s. Therefore, weightlessness information collection in the gasification reaction process at constant temperature can be approximately realized.

Preferably, there is a round hole in the center of water-cooled tray 315 for the derrick 22 to pass through. The hook at the bottom of balance 23 is located in the same center line with the round hole of the water-cooled tray 315 to avoid the crucible 21 and the derrick 22 from touching the quartz tube 51 during the descending process.

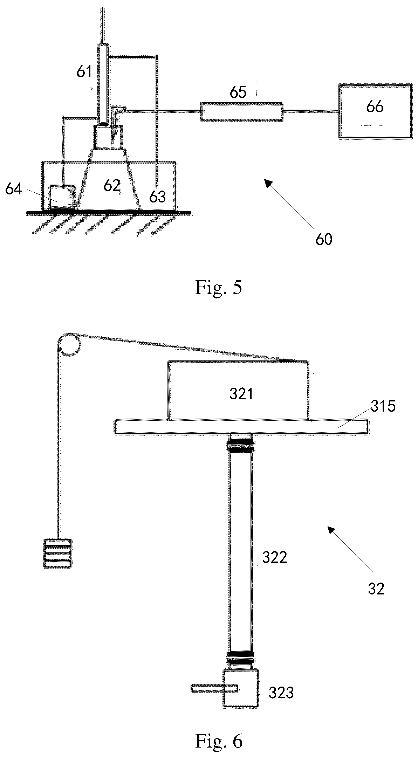

As shown in Fig. 5, the product collection subsystem 60 includes a condensing tube 61, a conical bottle 62, a water bath box 63, a vacuum pump 64 and a drying tube 65.

The condensate tube 61 is connected with the air outlet 512, which is configured for condensing the gas and liquid products produced by the solid waste reaction sample.

The conical bottle 62 is connected with condensing tube 61, and configured for collecting gas and liquid products after condensation. The conical bottle 62 is placed in water bath box 63, the water bath box 63 is configured for storing the constant temperature water, to ensure the separation of gas and liquid products. To ensure that the reactive gas and liquid products can be separated well, the water temperature in the water bath box 62 should be kept at 0-3°C.

The vacuum pump 64 is connected with the water bath box 63 and the outer wall of the condensing tube 61 respectively at two ends thereof, and configured for transporting the water in the water bath box 63 to the outer wall of the condensing tube 61 and flowing down along the condensing tube 61. Liquid tar can be condensed by condensation of the reaction product through condensing tube 61.

The drying tube 65 is connected with the conical bottle 62 and the air collector 66 at two ends thereof, and configured for drying the gas products and transporting the gas products to the air collector 66 for collection. It should be noted that the desiccant filled in the drying tube 65 is allochroic silicagel. When the silicagel does not absorb water, it appears blue, and while the silica gel is saturated with water, the color becomes red, which is convenient to remind the experimenter of the working state of the drying tube 65. If the color of silicagel becomes red, silicagel desiccant should be replaced to prevent the water vapor from mixing in the product gas. The water-saturated silicagel can be placed in a drying oven at 105 °C for regeneration and reuse.

Preferably, the air collector 66 is aluminum foil air collector or polytetrafluoron air collector, which is convenient for stable preservation of gas products. The reactive gas product components can be stored in the two air collectors for 12-48h without significant changes. The condensing tube 61 is connected with the air outlet 512 through a high temperature resistant steel wire hose. The condensing tube 61 is connected with the conical bottle 62 with the high temperature resistant silica tube and quartz glass tube both having a diameter of 10mm, and sealed with a rubber plug. The conical bottle 62, the drying tube 65 and the air collector 66 are placed in sequence from left to right and connected with silicagel tubes having a diameter of 10 mm.

As shown in Fig. 6, the sealing subsystem 32 includes a balance cover 321 and a bellows 322. The balance cover 321 is fixedly connected with the water-cooled tray 315, and configured for sealing the balance 23.

One end of the bellows 322 is fixedly connected with the water-cooled tray 315, and the other end of the bellows 322 is fixedly connected with the quartz tube 51 through the ball valve 323. The ball valve 323 is made from 304 stainless steel and havs an inner diameter of 40mm. The bellows 322 is made from 304 stainless steel. The bellows 322 has a total length of 1000mm and a maximum compression length of 600mm. The upper and lower ends of the bellows 322, the lower end of the water-cooled tray 315 and the upper end of the ball valve 323 are provided with a raised round tube of the same caliber, so that the upper end of the bellows 322 and the lower end of the water-cooled tray 315, the lower end of the bellows 322 and the upper end of the ball valve 43 are sealing connected through quick contact clamp.

Preferably, the length of the derrick 22 is longer than that of the bellows 322. When the water-cooled tray 315 is located at a predetermined high point, it is convenient for the rapid removal and placement of the solid waste reaction samples.

Preferably, a silicagel gasket is arranged between the balance cover 321 and the balance 23, and is fastened with hexagonal screws for further sealing.

It should be noted that the ball valve 323 can control the reactive gas flow. The purpose of imputting the protective gas is to form a certain positive pressure environment in the balance cover 321, and force the gas in the balance cover 321 and bellows 322 to discharge from the air outlet 512 from top to bottom, so as to prevent the hot air flow into the balance cover 321 from below and affect the weight measurement effect of the balance 23. When the solid waste reaction sample is lowered to the specified height through the lifting/lowering seal system 30, the balance cover 321, the water-cooled tray 315, the bellows 322, the ball valves 323, the air outlet 512, the quartz tube 51 and the air inlet 511 jointly form a sealing space, and the sealing space can only connected to the outside world via the air outlet 512 and the air inlet 511.

It should be understood that, to ensure the overall sealing effect of the experiment system, the connection of each part of the experiment system is provided with high temperature resistant silicagel gaskets.

### Embodiment 2

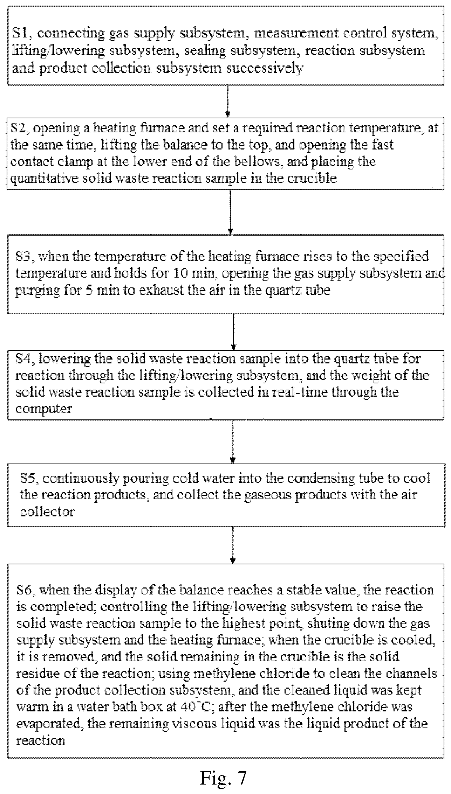

Embodiment 2 of the present application provides a gasification experiment method suitable for solid waste, which is suitable for the gasification experiment system suitable for solid waste in Embodiment 1 of the present application. As shown in Fig. 7, the gasification experiment method suitable for solid waste includes the steps of:
S1, connecting the gas supply subsystem 10, the measurement control system 20, the lifting/lowering subsystem 31, the sealing subsystem 32, the reaction subsystem 50 and the product collection subsystem 60 successively;
S2, opening the heating furnace 52 and setting a required reaction temperature, at the same time, lifting the balance 23 to the top, and opening the fast contact clamp at the lower end of the bellows 322, and placing the quantitative solid waste reaction sample in the crucible 21;
S3. when the temperature of the heating furnace 52 rises to the specified temperature and holds for 10 min, opening the gas supply subsystem 10 and purging for 5 min to exhaust the air in the quartz tube 51;
S4, lowering the solid waste reaction sample into the quartz tube 51 for reaction through the lifting/lowering subsystem 31, and the weight of the solid waste reaction sample is collected in real-time through the computer 24;
S5, pouring cold water into the condensing tube 61 continuously to cool the reaction products, and collectting the gaseous products from the air collector 66;
S6, when the display of the balance 23 reaches a stable value, the reaction is completed; controlling the lifting/lowering subsystem 31 to raise the solid waste reaction sample to the highest point, shuting down the gas supply subsystem 10 and the heating furnace 52; when the crucible 21 is cooled, it is removed, and the solid remaining in the crucible 21 is the solid residue of the reaction; using methylene chloride to clean the channels of the product collection subsystem 60, and the cleaned liquid was kept warm in a water bath box 63 at 40°C; after the methylene chloride was evaporated, the remaining viscous liquid was the liquid product of the reaction.

The present application provides a gasification experiment system and method suitable for solid waste, realizes two functions of real-time stable weight measurement and product collection of macroscopic quantity samples in the gasification process at fixed temperature, and solves the problem of single function of traditional thermogravimetric analyzer and the conventional tubular fixed-bed reactor. Due to the seal of the balance cover, bellows, ball valve and other parts, the experiment process will not mix air and other impurities, to ensure the accuracy of the experiment. The product collection subsystem uses cold water to cool the gas and liquid products, which can ensure the separation effect of different products and makes the subsequent product detection more accurate. At the same time, the addition of drying tube avoids the influence of water vapor on the gas composition of the product. The present application has the advantages of a common thermogrory analyzer and a conventional tubular fixed-bed reactor. Under the condition of constant temperature, the mass change information of solid waste and the gas composition of the product of the solid waste samples in the gasification process can be obtained at the same time. In addition, the operating system of the present application adopts an intelligent touch screen control system, which can simultaneously control multi-segment heating program, and has the function of overtemperature self-tuning, which is simple to operate and easy to learn.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A gasification experiment system suitable for solid waste, comprising: a gas supply subsystem (10) configured for providing external gas and a reaction subsystem (50) connected with the gas supply subsystem (10); **characterized in that** the gasification experiment system suitable for solid waste further comprises a lifting/lowering seal system (30) and a measurement control system (20), the measurement control system (20) is communication connected with the reaction subsystem (50) and the lifting/lowering seal system (30) respectively;
wherein a solid waste reaction sample is placed in the lifting/lowering seal system (30), and the measurement control system (20) is configured for controlling the temperature of the chamber in the reaction subsystem (50) to heat a preset temperature, controlling the lifting/lowing seal system (30) to transport the solid waste reaction sample into a sealing chamber of the reaction subsystem (50), and gasifying the solid waste under the action of gas.

2. The gasification experiment system suitable for solid waste according to claim 1, **characterized in that** the measurement control system (20) is also configured for measuring real-time state parameters of the solid waste reaction sample, and controlling the lifting/lowering seal system (30) to move to discharge the waste material after gasification treatment out of the sealing chamber of the reaction subsystem (50) according to the change of the state parameter.

3. The gasification experiment system suitable for solid waste according to claim 2, **characterized in that** the gas supply subsystem (10) is configured for supplying gas to the reaction subsystem (50) and the lifting/lowering seal system (30) after temperature of the sealing chamber in the reaction subsystem (50) is heated to a preset temperature, the gas supply subsystem (10) comprises:
a reactive gas storage tank (11) stored with reactive gas, the reactive gas storage tank (11) has one end connected to the reaction subsystem (50) and is configured for providing reactive gas to the reaction subsystem (50);
a protective gas storage tank (12) stored with protective gas, the protective gas storage tank (12) has one end connected to the lifting/lowering seal system (30) and is configured for providing protective gas to the lifting seal system (30).

4. The gasification experiment system suitable for solid waste according to claim 3, **characterized in that** the gasification experiment system suitable for solid waste further comprises a product collection subsystem (60) connected with the reaction subsystem (50), configured for separating and collecting gaseous and liquid products of solid waste reaction samples.

5. The gasification experiment system suitable for solid waste according to claim 4, **characterized in that** the measurement control system (20) comprises:
a crucible (21), configured for placing solid waste reaction samples;
a derrick (22), connected with the crucible (21), and configured for suspending the crucible (21);
a balance (23), configured for measuring weight of the solid waste reaction sample, and the derrick (22) is connected with a hook of the lower part of the balance (23);
a computer (24), communicated with the balance (23) and the lifting/lowering seal system (30), and
configured for receiving the state parameter of the solid waste reaction sample measured in real-time by the balance (23); and controlling the lifting/lowering seal system (30) to move the waste material after gasification treatment out of the sealing chamber of the reaction subsystem (50) according to the state parameter;
the computer (24) is communicated with the reaction subsystem (50), and configured for controlling the chamber temperature in the reaction subsystem (50) to heat a preset temperature, controlling the lifting/lowing seal system (30) to transporte the solid waste into a sealing chamber of the reaction subsystem (50), and gasifying the solid waste under the action of gas.

6. The gasification experiment system suitable for solid waste to claim 5, **characterized in that** the lifting/lowering seal system (30) comprises:
a lifting/lowering subsystem (31), communicated with the computer (24), and configured for lifting or lowering the crucible (21) under the control of the computer (24);
a sealing subsystem (32), connected with the lifting/lowering subsystem (31), and configured for forming a sealing space to prevent impurity gas from influencing the experimental results.

7. The gasification experiment system suitable for solid waste according to claim 6, **characterized in that** the reaction subsystem (50) comprises:
a quartz tube (51), configured for forming a sealing chamber for reaction of the solid waste reaction sample; an upper end of the quartz tube (51) is provided with an air outlet (512), and the lower end is provided with an air inlet (511); the air inlet (511) is connected with a reactive gas storage tank (11) and configured for inputing the reactive gas into the quartz tube (51); the air outlet (512) is connected with the product collection subsystem (60) and configured for transporting gaseous and liquid products to the product collection subsystem (60);
a heating furnace (52), surrounding the quartz tube (51) and communicated with the computer (24);
the heating furnace (52) is configured for heating the quartz tube (51) under the control of the computer (24); the heating furnace (52) comprises a first constant house (521) and a second constant house (522);
a first thermocouple (53), arranged in the middle of the first constant house (521) and communicated with the computer (24), the first thermocouple (53) is configured for detecting the temperature of the first constant house (521) and generating a temperature signal, and transmitting the temperature signal to the computer (24);
a second thermocouple (54), arranged in the middle of the second constant house (522) and communicated with the computer (24), the second thermocouple (54) is configured for detecting the temperature of the second constant house (522) and generating a temperature signal, and transmitting the temperature signal to the computer (24).

8. The gasification experiment system suitable for solid waste according to claim 7, **characterized in that** the lifting/lowering subsystem (31) comprises:
a stepping motor (311), configured for controllably providing lifting/lowering driving force;
a ball screw (313), fixedly connected with a rotating shaft of the stepping motor (311) via a coupling (312);
a slider (316), slidably connected with the ball screw (313);
a water-cooled tray (315), fixedly connected with the slider (316) and configured for placing the balance (23);
rotation of a rotating shaft of the stepping motor (311) drives the ball screw (313) to rotate through the coupling (312), so that the slider (316) moves along the ball screw (313) up and down to realize the lifting/lowering of the water-cooled tray (315);
a first support frame (314), fixedly connected with the stepping motor (311) and configured for supporting the stepping motor (311);
a communication module of the stepping motor (311) is connected with the computer (24), to realize forward or reverse of the rotating shaft of the stepping motor (311) under the control of the computer (24), to transport the solid waste reaction sample to the sealing chamber of the reaction subsystem (50) or to remove the waste material after gasification treatment out of the sealing chamber of the reaction subsystem (50).

9. The gasification experiment system suitable for solid waste according to claim 8, **characterized in that** the product collection subsystem (60) comprises:
a condensing tube (61), connected with the air outlet (512), and configured for condensing the gas and liquid products produced by the solid waste reaction sample;
a conical bottle (62), connected with the condensing tube (61), and configured for collecting gas and liquid products after condensation;
a water bath box (63), wherein the conical bottle (62) is placed in the water bath box (63), the water bath box (63) is configured for storing constant temperature water, to ensure the separation of gas and liquid products;
a vacuum pump (64), connected with the water bath box (63) and the outer wall of the condensing tube (61) respectively at two ends thereof, and configured for transporting the water in the water bath box (63) to the outer wall of the condensing tube (61) and flow down along the condensing tube (61);
a drying tube (65), connected with the conical bottle (62) and the air collector (66) at two ends thereof, and configured for drying the gas products and transport the dried gas products to the air collector (66) for collection.

10. The gasification experiment system suitable for solid waste according to claim 9, **characterized in that** the air collector (66) is an aluminum foil air collector or a polytetrafluoron air collector, which is convenient for stable preservation of gas products.

11. The gasification experiment system suitable for solid waste according to claim 10, **characterized in that** the sealing subsystem (32) comprises:
a balance cover (321), fixedly connected with the water-cooled tray (315), and configured for sealing the balance (23);
a bellows (322), having one end fixedly connected with the water-cooled tray (315) and other end fixedly connected with the quartz tube (51) through the ball valve (323).

12. The gasification experiment system suitable for solid waste according to claim 11, **characterized in that** a length of the derrick (22) is longer than that of the bellows (322), and when the water-cooled tray (315) is located at a predetermined high point, solid waste reaction samples can be removed and placed conveniently and rapidly.

13. The gasification experiment system suitable for solid waste according to claim 12, **characterized in that** the lifting/lowering subsystem (31) futher comprises a balance weight (317), the balance weight (317) is fixedly connected with the balance cover (321) through a silk wire, and the silk wire is supported by a roller fixed on the top of the first support frame (314).

14. The gasification experiment system suitable for solid waste according to claim 13, **characterized in that** the gasification experiment system suitable for solid waste futher comprises a silicagel gasket arranged between the balance cover (321) and the balance (23) for further sealing.

15. The gasification experiment system suitable for solid waste according to claim 14, **characterized in that** the gasification experiment system suitable for solid waste futher comprises a temperature control system, respectively connected with the heating furnace (52) and the computer (24), and the temperature control system is configured for setting a multi-segment heating program to control the heating of the heating furnace (52) under the control of the computer (24), and the temperature control system is an intelligent touch screen control system.

16. A gasification experiment method suitable for solid waste, **characterized in that** the gasification experiment method suitable for solid waste comprising the steps of:
S1, connecting the gas supply subsystem (10), measurement control system (20), lifting/lowering subsystem (31), sealing subsystem (32), reaction subsystem (50) and product collection subsystem (60) successively;
S2, opening the heating furnace (52) and setting a required reaction temperature, at the same time, lifting the balance (23) to the top and opening the fast contact clamp at the lower end of the bellows (322), and placing the quantitative solid waste reaction sample in the crucible (21);
S3, when the temperature of the heating furnace (52) rises to the specified temperature and holds for 10 min, opening the gas supply subsystem (10) and purging for 5 min to exhaust the air in the quartz tube (51);
S4, lowering the solid waste reaction sample into the quartz tube (51) for reaction through the lifting/lowering subsystem (31), and collecting the weight of the solid waste reaction sample in real-time through the computer (24);
S5, pouring cold water into the condensing tube (61) continuously to cool the reaction products, and collecting the gaseous products from the air collector (66);
S6, when display of the balance (23) reaches a stable value, the reaction is completed; controlling the lifting/lowering subsystem (31) to raise the solid waste reaction sample to the highest point, shuting down the gas supply subsystem (10) and the heating furnace (52); removing the crucible (21) when it is cooled, the solid remaining in the crucible (21) is the solid residue of the reaction; using methylene chloride to clean the channels of the product collection subsystem (60), and the cleaned liquid was kept warm in a water bath box (63); after the methylene chloride was evaporated, the remaining viscous liquid was the liquid product of the reaction.
